Europäisches Patentamt

European Patent Office

Office européen des brevets

(11) Publication number: **0 444 739 A1**

# EUROPEAN PATENT APPLICATION

(21) Application number: **91200363.9**

(22) Date of filing: **20.02.91**

(51) Int. Cl.⁵: **F16L 41/08, F16L 37/08, F16L 23/00**

(30) Priority: **27.02.90 IT 1950890**

(43) Date of publication of application:
**04.09.91 Bulletin 91/36**

(84) Designated Contracting States:
**AT BE CH DE ES FR GB IT LI NL SE**

(71) Applicant: **SALVAGNINI S.p.A.**
**Strada della Favorita**
**I-36040 Sarego (Vicenza)(IT)**

(72) Inventor: **Montecchio, Renato**
**Via Municipio, 59**
**I-36040 Sossano (Vicenza)(IT)**
Inventor: **Salvagnini, Guido**
**Via dalla Prà**
**I-36040 Sarego (Vicenza)(IT)**

(74) Representative: **Marchi, Massimo et al**
**c/o Marchi & Mittler s.r.l. Viale Lombardia 20**
**I-20131 Milano(IT)**

(54) **Separable fitting system for rigid pipes of hydraulic circuits.**

(57) The fitting system comprises the accomplishment of a conical flare at the extremity (2) of the pipe (1) to be connected, the execution in the metal casing (3) of threaded holes (6) parallel to the metal pipe (1), the connection of the internal face of the conical flare of the pipe (1) with a spherical surface face of a metal casing (3) of a hydraulic component or of a ring (4) superimposed over it, the positioning of a drilled flange (7) having an internal conical surface inserted over the pipe and provided with parallel holes (8) aligned with said threaded holes (6) for the passage of screws (9) which may be screwed into said threaded holes (6) to press the conical surface of the flange (7) against the external surface of the conical flare (2) of the pipe (1), so that the internal face of the same conical flare may press against said spherical surface face to accomplish with it a constraint making a fluid seal.

Fig. 1

The present invention relates to a separable fitting system for rigid pipes of hydraulic circuits.

Different solutions are known of the problem of rigidly connecting a cylindrical metal pipe having a circular cross-section to the metal casing of a hydraulic component, that is, a pump, a distributor, a filter, etc., so that the above pipe and casing may be separated and reconnected by means of ordinary wrenches and so that the fluid under pressure flowing through the pipe and in the casing does not escape into the surrounding environment.

Such a problem, which may be called the main one, may be divided into four distinct sub-problems.

The first sub-problem is that of creating, on a surface of the pipe, one or more hooks so that the pipe itself may be pressed up against the metal casing to which it is to be connected.

The second sub-problem is that of creating, in the abovementioned casing, one or more hooks to react against the force acting on the pipe.

The third sub-problem is that of preventing the escape of the fluid under pressure in the pipe, possibly by inserting one or more sealing elements between pipe and metal casing.

Lastly, the fourth sub-problem is that of steadily pressing the pipe against the metal casing by using the above hooks to overcome the forces which tend to separate them and to keep the sealing surfaces together.

The simplest solution of the main problem is constituted by one element only and is the direct welding of the pipe onto the casing, by means of one of the known methods for the welding of metals; the welding bead, which surrounds the extremity of the casing and expands over the plane surface of the casing, is integral with one and the other due to the fusion of the weld metal with the pipe and casing metals, thus creating the hooks required by the first two secondary sub-problems, and, if it is compact, precluding any way of escape for the fluid under pressure, solving the third and fourth secondary sub-problem. There is lacking, however, in this solution the possibility of separating the two elements by means of ordinary wrenches.

Again according to the known art, it is possible to identify for each of the sub-problems listed above a particular solution and then to variously combine such solutions and thus to arrive at a possible solution of the main problem.

In particular the known solutions of the first sub-problem are three: the deformation of the extremity of the pipe from cylindrical to conical or spherical or plane; the compression of a bush over the external surface of the pipe until it becomes integral with the pipe itself, by means of an incision or hump; the welding of a flanged bush over the extremity of the pipe.

The known solutions of the second sub-problem are two: the threading, in the casing, concentric with the hole which extends the cavity of the pipe in the casing itself; the execution of two or more threaded holes parallel to said hole and arranged symmetrically with respect to it.

The known solutions of the third sub-problem are two: the bringing together of a conical metal surface and a conical or spherical metal surface, in whose circumferential contact the specific compression can be so high as to cancel any meatus; the insertion of elastic gaskets between plane contact surfaces or in channels obtained therein.

The known solutions of the fourth sub-problem are essentially three: an externally threaded bush with expansions for holding by means of ordinary wrenches, screwed into the threaded hole coaxial with the pipe, which presses against the hooks of the pipe passing through it, to hold the sealing surfaces together; a pair of threaded pieces, the first externally, the second internally, both provided with expansions for holding by means of ordinary wrenches, the first being destined to be hermetically screwed into the threaded hole coaxial with the pipe and the second to be screwed onto the first to press on the hooks of the pipe and to hold the sealing surfaces together; a plate (flange) with a hole drilled through its centre for the passage of the pipe and with two or more holes parallel to the central one, arranged symmetrically with it, for the passage of two more screws, the flange being destined to press on the hooks of the pipe due to the effect of the pull of the screws which go to screw themselves into as many threaded holes of the casing.

The object of the present invention is to solve the main problem by combining in a suitable manner the above known solutions of the first, second, third and fourth sub-problem, accomplishing in effect a fitting system for pipes of hydraulic circuits which allows the optimum connection of one or more hydraulic pipes to the casing of a hydraulic component.

According to the invention such object is attained through a separable fitting system for rigid pipes of hydraulic circuits, in particular for the connection of a cylindrical metal pipe having a circular cross-section to the metal casing of a hydraulic component, characterized in that it comprises the accomplishment of a conical flare at the extremity of the pipe, the execution in the metal casing of threaded holes parallel to the metal pipe, the connection of the internal face of the conical flare of the pipe with a spherical surface face of the metal casing, the positioning of a flange having a conical surface inserted over the pipe and provided with parallel holes aligned with said threaded holes for the passage of screws which may be screwed into said threaded holes to press said conical surface of the flange against the external surface of the conical flare of the pipe, so that the internal face of the same conical flare may press against said spherical surface face to accomplish with it a constraint making a fluid seal.

In an alternative version of the same invention the spherical sealing surface, instead of being obtained in the casing, belongs to an additional ring, whose plane surface resting against the casing's plane face ensures the fluid seal thanks to a gasket of rubber or such like inserted in a circular groove.

The conical deformation of the pipe's extremity, as opposed to other types of deformation, such as the plane one or the spherical one, is especially strong since the elongation of the external fibres is not too high, it can be accomplished with an ordinary flaring punch and allows a good linear contact with a convex sphere such as that according to which the extremity of the metal casing is shaped.

Lastly the use of the connecting flange with screws involves a smaller surrounding space with respect to ordinary fittings with a locking nut.

The features of the present invention shall be made more evident by an embodiment illustrated as a non-limiting example in the enclosed drawings, wherein:

Fig.s 1 and 2 illustrate axial sectional views of systems of fittings according to the present invention;

Fig.s 3 and 4 illustrate the same systems of fittings seen from above.

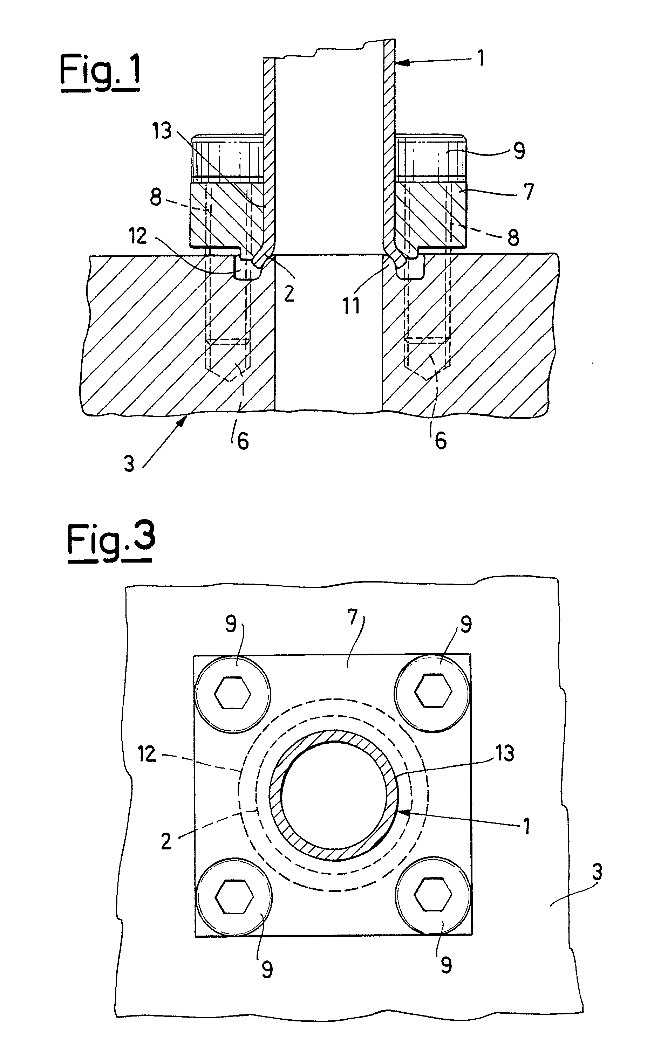

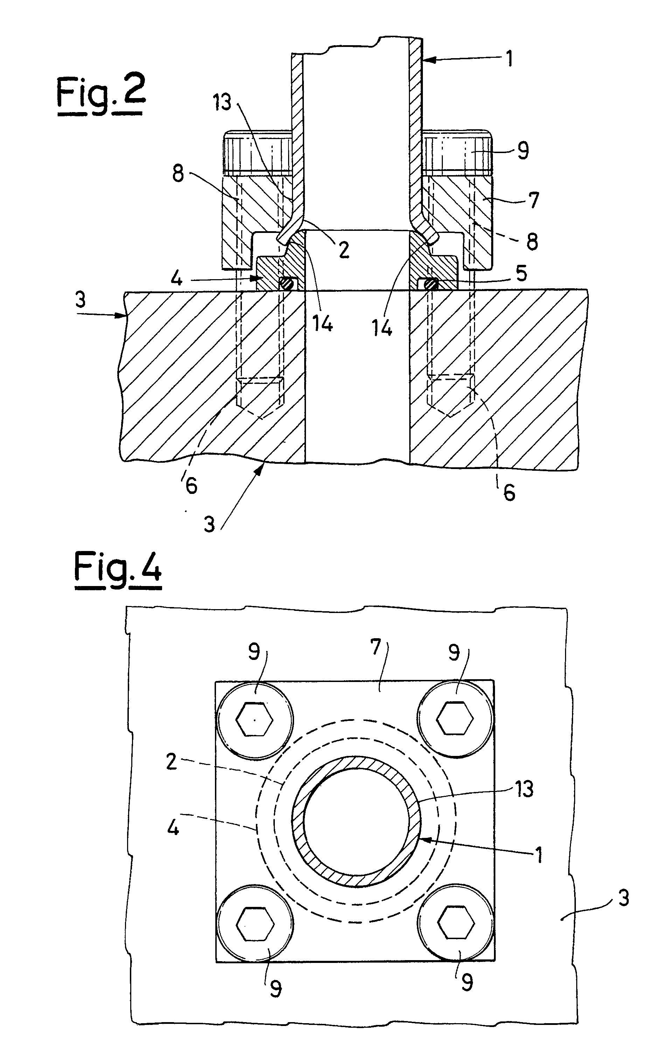

With reference to the figures mentioned, the extremity 2 of a metal pipe 1, flared in the shape of a cone, is associated with the shaped extremity of a spherical tang 11 obtained superficially in a circular cavity 12 of a metal casing 3 of a hydraulic component, as shown in Fig. 1, or with the spherical shape 14 of a ring 4 superimposed over metal casing 3 and provided with a sealing gasket 5, as shown in Fig. 2. There are provided in metal casing 3 threaded holes 6, in particular four holes as shown in the figures, which extend in a direction parallel to the axis of metal pipe 1.

Round extremity 2 of metal pipe 1 there is arranged a square flange 7 provided with a central hole 13 and with further holes 8, parallel to the central one, arranged symmetrically with it and aligned with said threaded holes 6 for the passage of screws 9. Flange 7 presses against deformed extremity 2 of pipe 1 to ensure the sealing engagement of its internal conical surface with the external spherical surface of tang 11 of metal casing 3 (Fig. 1) or of spherical shape 14 of ring 4 (Fig. 2) after the passage of screws 9 through said holes 8 and their subsequent screwing into said threaded holes 6.

## Claims

1. Separable fitting system for rigid pipes of hydraulic circuits, in particular for the connection of a cylindrical metal pipe (1) having a circular cross-section to the metal casing (3) of a hydraulic component, characterized in that it comprises the accomplishment of a conical flare at the extremity (2) of the pipe (1), the execution in the metal casing (3) of threaded holes (6) parallel to the metal pipe (1), the connection of the internal face of the conical flare of the pipe (1) with a spherical surface face of the metal casing (3), the positioning of a drilled flange (7) having a conical surface inserted over the pipe (1) and provided with parallel holes (8) aligned with said threaded holes (6) for the passage of screws (9) which may be screwed into said threaded holes (6) to press said conical surface of the flange (7) against the external surface of the conical flare (2) of the pipe (1), so that the internal face of the same conical flare may press against said spherical surface face to accomplish with it a constraint making a fluid seal.

2. Fitting system according to claim 1, characterized in that said spherical surface face is accomplished on a ring (4) superimposed over said metal casing (3) with the interposition of a gasket (5) and held against it by said flange (7).

# Fig.1

# Fig.3

# Fig.2

# Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE - A1 - 3 915 011 (VEB KOMBINAT WÄLZLAGER UND NORMTEILE) * Totality * | 1,2 | F 16 L 41/08 F 16 L 37/08 F 16 L 23/00 |
| Y | FR - A1 - 2 492 499 (LUCAS INDUSTRIES LTD.) * Totality * | 1,2 | |
| A | DE - A1 - 3 633 900 (BAYERISCHE MOTOREN WERKE AG) * Totality * | 1 | |
| A | DE - A1 - 3 702 949 (AGINTEC AG) * Totality * | 1,2 | |
| A | FR - A1 - 2 448 094 (TOUPIN) * Totality * | 1 | |

TECHNICAL FIELDS
SEARCHED (Int. Cl.5)

F 16 L 19/00
F 16 L 23/00
F 16 L 25/00
F 16 L 37/00
F 16 L 41/00

The present search report has been drawn up for all claims

| Place of search | Date of completion of the search | Examiner |
|---|---|---|
| VIENNA | 22-04-1991 | SCHUGANICH |